# EUROPÄISCHE PATENTSCHRIFT

(11) **EP 2 764 911 B1**
(45) Veröffentlichungstag und Bekanntmachung des Hinweises auf die Patenterteilung: **30.05.2018**
(21) Anmeldenummer: 13154504.8
(22) Anmeldetag: 08.02.2013
(51) Int. Cl.: B01J 19/00, B01J 19/24, C08G 69/16

(54) **Produktionsanlage und Verfahren zur Polymerisation von Polyamiden**
Production plant and method for the polymerisation of polyamides
Installation et procédé de polymérisation de polyamide

(43) Veröffentlichungstag der Anmeldung: 13.08.2014
(73) Patentinhaber: Uhde Inventa-Fischer GmbH, 13509 Berlin (DE)
(72) Erfinder: Siebecke, Ekkehard, 10825 Berlin (DE); Katzer, Johannes, 10439 Berlin (DE); Königsmann, Bernd, 15518 Langewahl (DE); Bär, Mirko, 16547 Birkenwerder (DE)
(74) Vertreter: Pfenning, Meinig & Partner mbB

(56) Entgegenhaltungen:
- EP-A1- 1 148 077
- US-A- 2 562 796
- US-A- 3 232 715
- US-A- 3 451 976
- US-A- 3 565 866
- US-A- 3 813 366
- US-A- 4 354 020
- US-A1- 2009 131 610

## Beschreibung

Die Erfindung betrifft eine Produktionsanlage und ein Verfahren für die Polymerisation von Polyamiden, insbesondere PA 6. Durch die erfindungsgemäße Anlage sowie das erfindungsgemäße Verfahren lassen sich hochviskose Polyamide herstellen, die für diverse Anwendungsfelder auch bei intensiver Stabilisierung des Polymers bei gleichzeitig hoher Produktqualität geeignet sind.

Die Erhöhung der Viskosität in der Polymerisationsstufe erfordert aufgrund des Chemischen Gleichgewichtes die Abtrennung von Wasser aus der Polymerschmelze. Dies erfolgt am effektivsten durch zusätzliche Reaktorstufen, die druckabgestuft (mit abnehmenden Druck) nacheinander durchfahren werden. Dabei wird der Wasseranteil von Stufe zu Stufe reduziert und damit die Viskosität gesteigert. Dabei ergibt sich aber durch die zusätzliche Anzahl der Reaktoren und zugehöriger Ausrüstungsteile eine erhöhte Komplexität der Gesamtanlage.

Die Abtrennung des Wassers aus der letzten Polymerisationsstufe wird klassisch durch Absenkung des Druckes oder Anhebung der Temperatur in der letzten Reaktorstufe verstärkt. Beide Verfahren haben eine nachteilige Wirkung auf die Qualität des Produktes. Bei Überschreiten einer Grenztemperatur an den Wärmetauscherflächen (> 290 °C) kann es zu Versetzung und thermischer Schädigung des Polymers an den Wärmetauscherflächen kommen. Bei starker Absenkung des Druckes unter 600 mbar absolut kann es zu Ablagerungen an Wänden kommen, die mit längerer Betriebszeit ebenfalls zur Degradation des Polymers führt und eine Verfärbung bis zur Schwarzfärbung mit sich bringt. Hierdurch kommt es zu schwarzen Partikeln im Produkt, da die geschwärzten Ablagerungen in die Schmelze fallen.

Die Polymerisation erfolgt gemäß dem Stand der Technik gewöhnlich in 2 Stufen (Synthetische Fasern, Franz Fourne, München/Wien 1995, S. 54-55). Die Viskositätserhöhung von Prepolymer durch Temperaturabsenkung ist aus Ind. Eng. Chem. Res. 1997, 36, 1202-1210 bekannt.

Es war daher Aufgabe der vorliegenden Erfindung eine Anlage für die Polymerisation von Polyamiden bereitzustellen, der eine stärkere Abtrennung von Wasser im letzten Polymerisationsreaktor ermöglicht ohne dass es zu einer thermischen Schädigung des Polymers kommt.

Diese Aufgabe wird durch den Reaktor mit den Merkmalen des Anspruchs 1 und durch das Verfahren mit den Merkmalen des Anspruchs 6 gelöst. Die weiteren abhängigen Ansprüche zeigen vorteilhafte Weiterbildungen auf. Erfindungsgemäß wird eine Produktionsanlage für die Polymerisation von Polyamiden, insbesondere PA 6, sowie deren Copolymeren bereitgestellt, enhaltend einen Reaktor für die Prepolymerisation mit den folgenden Komponenten:
- einen Einlaufbereich für die Zugabe der Edukte,
- einen Heizaggregat,
- einen ersten Strömungsrohrteil, der eine separate Wandbeheizung aufweist,
- einen zweiten Strömungsrohrteil, der eine separate Wandbeheizung aufweist sowie
- eine Auslassleitung für das Prepolymer,
wobei der Reaktor zwischen dem ersten Strömungsrohrteil und dem zweiten Strömungsrohrteil ein Kühlaggregat aufweist und das Kühlaggregat und die separaten Wandbeheizungen über einen einzigen Wärmeträgerkreislauf thermisch gekoppelt sind;
sowie einen sich anschließenden Reaktor mit einem vertikalen Kondensationsrohr (VK-Reaktor).

Der erfindungsgemäße Reaktor weist im Unterschied zu den aus dem Stand der Technik bekannten Reaktoren zwischen dem ersten Strömungsrohrteil und dem zweiten Strömungsrohrteil ein Kühlaggregat auf. Hierdurch kann die Temperatur der Polymerschmelze im Ausgang des Reaktors für die Prepolymerisation gesenkt werden. Hierdurch wird das Reaktionsgewicht so verschoben, dass der Anteil von verdampfbarem Wasser in der Polymerschmelze vergrößert wird. Nach Erreichen des chemischen Gleichgewichtes bei niedrigerer Temperatur im Auslauf des Reaktors für die Prepolymerisation kann in einem sich anschließenden Reaktor ohne weitere konstruktive Änderungen eine stärkere Wasserverdampfung erreicht werden, die zu einer höheren relativen Viskosität (RV) im Auslauf des sich anschließenden Reaktors führt.

Bei einem unstabilisierten Polymer kann so die relative Viskosität um bis zu 0,2 Viskositätspunkte erhöht werden, wobei die Prozessparameter in dem sich anschließenden Reaktor unverändert belassen werden können.

Eine bevorzugte Ausführungsform sieht vor, dass dem Einlaufbereich ein Mischbehälter vorgeschaltet ist, in dem die Edukte, insbesondere Monomere wie ε-Caprolactam, Wasser und Additive vorgemischt werden können.

Das Heizaggregat ist vorzugsweise ein statisches Heizaggregat, insbesondere ein Rohrbündel, ein innenbeheizter Überströmkörper, ein Plattenwärmetauscher oder eine Heizschlange. Ebenso können dynamische Heizaggregate eingesetzt werden, wie z.B. ein Roberts-Verdampfer oder ein Umlauferhitzer.

Die separaten Wandbeheizungen sind vorzugsweise unabhängig voneinander Doppelmäntel und/oder Halbrohrheizschlangen.

Die Strömungsrohrteile im Reaktor weisen vorzugsweise Strömungsgleichrichter auf, um eine Kolbenströmung der Polymerschmelze zu ermöglichen.

Es ist weiterhin bevorzugt, dass in der Auslassleitung eine Austragspumpe zum Transport des Prepolymers integriert ist.

Die Auslassleitung kann dabei weiterhin vorzugsweise ein Wandbeheizung, insbesondere einen Doppelmantel aufweisen.

Erfindungsgemäß wird ebenso ein Verfahren zur Polymerisation von Polyamiden in einem Reaktor bereitgestellt, bei dem
a) in einen Einlaufbereich (1) des Reaktors die Edukte dosiert werden,
b) mittels eines Heizaggregats (2) die Temperatur der Polymerschmelze auf 240 bis 270°C, insbesondere 250 bis 265 °C eingestellt wird,
c) die Polymerschmelze über einen ersten Strömungsrohrteil (3), der mit einer separaten Wandbeheizung zur Vermeidung eines Wärmeverlusts gekoppelt ist, die Polymerschmelze zu einem Kühlaggregat (4) geleitet wird, mit dem die Temperatur der Polymerschmelze auf 220 bis 255 °C, insbesondere 230 bis 240 °C eingestellt wird und
d) die Polymerschmelze über einen zweiten Strömungsrohrteil (5), der mit einer separaten Wandbeheizung zur Vermeidung eines Wärmeverlusts gekoppelt ist, zu einer Auslassleitung (7) transportiert wird und
e) das Prepolymer über die Auslassleitung einem Reaktor mit einem vertikalen Kondensationsrohr (VK-Reaktor) (10) zugeführt wird, wobei das Kühlaggregat und die separaten Wandbeheizungen über einen einzigen Wärmeträgerkreislauf thermisch gekoppelt sind.

Eine weitere bevorzugte Ausführungsform des erfindungsgemäßen Verfahrens sieht vor, dass in einem Mischbehälter, der dem Einlaufbereich des Reaktors vorgeschaltet ist, die Edukte vorgemischt werden.

Im erfindungsgemäßen Verfahren lassen sich als Heizaggregate vorzugsweise statische Heizaggregate, insbesondere ein Rohrbündel, ein innenbeheizter Überströmkörper, ein Plattenwärmetauscher oder eine Heizschlange einsetzen. Ebenso ist es möglich, dynamische Heizaggregate, insbesondere einen Roberts-Verdampfer oder einen Umlauferhitzer, zu verwenden.

Die Polymerschmelze wird vorzugsweise durch die Auslassleitung mittels einer Austragspumpe oder mittels Druck im Reaktor transportiert.

Wenn nach einer bevorzugten Variante die Auslassleitung eine Beheizung, insbesondere einen Heizmantel, aufweist, kann auf diese Weise eine Einleitung von Wärme in die Polymerschmelze erfolgen. In diesem Fall ist die besagte Beheizung vorzugsweise ebenfalls über den Wärmeträgerkreislauf thermisch gekoppelt.

Eine weitere bevorzugte Variante sieht vor, dass die Temperatur der Polymerschmelze am Übergang der Auslassleitung zum Kondensationsrohr (VK-Reaktor) beträgt bevorzugt 240 bis 275 °C, besonders bevorzugt 253 bis 268°C.

In einer weiteren vorteilhaften Variante des Verfahrens weist das Polyamid eine relative Viskosität von 2,4 bis 4,5, insbesondere von 3,0 bis 3,6, gemessen in einer Lösung von 1 g Polyamid in 96%iger Schwefelsäure bei 25 °C auf.

Anhand der nachfolgenden Figuren soll der erfindungsgemäße Gegenstand näher erläutert werden, ohne diesen auf die hier gezeigte spezifische Ausführungsform einschränken zu wollen.

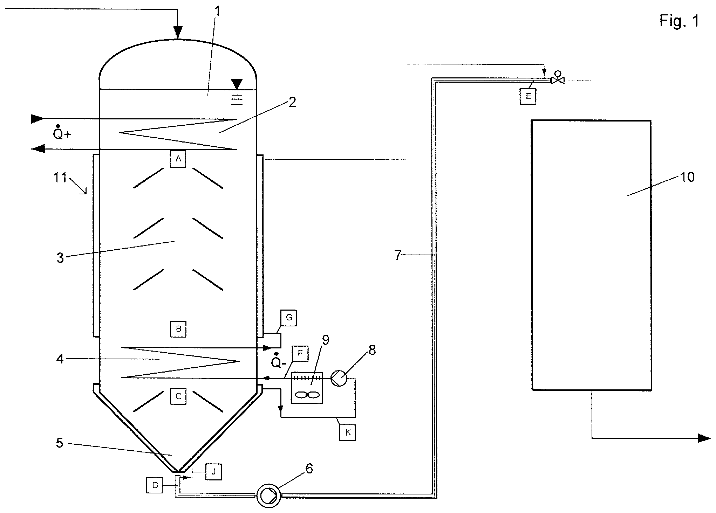

Fig. 1 zeigt anhand einer schematischen Darstellung eine erfindungsgemäße Produktionsanlage.
Der Prepolymerisationsreaktor (11) besteht aus einem Einlaufbereich (1) in den die Rohmaterialmischung aus Caprolactam, Wasser, Additiven und optional rückgeführten Extrakten aus einer Extraktionsstufe eindosiert werden. Es besteht auch die Möglichkeit, dass die Rohmaterialmischung in einem vorgeschalteten Mischbehälter bereits durchmischt und aufgeheizt wurde und die fertige Mischung in den Prepolymerisationsreaktor gegeben wird. Es ergibt sich ein Flüssigkeitsspiegel durch die angesammelte Rohmaterialmischung die eine Vergleichmäßigung der Schmelze mit sich bringt.

Unterhalb des Flüssigkeitsspiegels befindet sich ein Heizer (2), der entweder statisch (Rohrbündel, innenbeheizter Überströmkörper, Plattenwärmetauscher, Heizschlange oder ähnlich) oder als dynamischer Heizer (Roberts-Verdampfer, Umlaufheizer oder ähnlich) ausgeführt werden kann. Hier wird die für die Prepolymerisation notwendige Temperatur automatisch, kontinuierlich eingestellt.

Unterhalb des Heizers befindet sich ein Strömungsrohrteil (3), das mit Strömungsgleichrichtern ausgestattet ist, um eine Kolbenströmung der Schmelze und damit eine homogene Verweilzeitverteilung einzustellen. Dieser Reaktorteil ist komplett mit einer separaten Wandbeheizung (Doppelmantel oder Halbrohrheizschlange) ausgestattet, der als aktive Isolierung einem Wärmeverlust entgegenwirkt, ohne die Schmelzetemperatur zu beeinflussen.

Die Prepolymerschmelze wird danach durch einen statischen Prepolymerkühler (4) geführt, in dem die Temperatur auf eine Temperatur unterhalb der Prepolymerisationstemperatur aber oberhalb des Schmelzpunktes (225 bis 260 °C, bevorzugt 230 bis 240 °C) reduziert.

Unterhalb des Kühlers befindet sich ein weiterer Strömungsrohrteil (5), das mit Strömungsgleichrichtern ausgestattet ist, um eine Kolbenströmung der Schmelze und damit eine homogene Verweilzeitverteilung einzustellen. Dieser Reaktorteil ist wiederum mit einer separaten Wandbeheizung (Doppelmantel oder Halbrohrheizschlange) ausgestattet, der als aktive Isolierung einem Wärmeverlust entgegenwirkt, ohne die Schmelzetemperatur zu beeinflussen. Über einen Austragskonus wird die Schmelze aus dem Reaktor herausgeleitet und zu einer nachfolgenden Austragspumpe (6) geleitet. Optional kann auch der erhöhte Druck im Prepolymerisationsreaktor für den weiteren Schmelzetransport genutzt werden. Die Schmelze wird über eine beheizte Prepolymerleitung (7) zum Kopf des nachfolgenden VK-Rohrs (10) gefördert. Hierbei wird aufgrund des intensiven Kontaktes und der großen Rohroberfläche die Temperatur der Schmelze wieder angehoben.

Die Wärme, die der Polymerschmelze im Prepolymerkühler (4) entzogen wird, wird genutzt, um die Prepolymerschmelze, die den Prepolymerisationsreaktor verlässt wieder aufzuheizen. Durch die begrenzte Verweilzeit in der Prepolymerisationsleitung bleibt das chemische Gleichgewicht in der Prepolymerschmelze unverändert und die verstärkte Wasserabscheidung im nachfolgenden VK-Rohr (10) ist immer noch gegeben.

Die Kühlung der Prepolymerschmelze wird durch einen konstanten Wärmeträgerölstrom (HTM) gewährleistet. Abgekühltes HTM wird im Gegenstrom zur Schmelze durch den Schmelzekühler (4) geleitet. Dabei nimmt das Wärmeträgeröl die Einlauftemperatur der Schmelze in den Kühler an. Auf diesem Temperaturniveau kann das HTM genutzt werden, um den Heizmantel des Strömungsrohrteils (3) des Prepolymerisationsreaktors (11) zu beheizen. Danach wird das HTM im Gegenstrom zur Prepolymerschmelze in den Mantel der Prepolymerisationsleitung geführt. Durch die Gegenstromführung wird die Prepolymerschmelze aufgeheizt und das HTM wird nahezu auf Austrittstemperatur des Prepolymerisationsreaktors abgekühlt. Danach wird das HTM durch den Mantel des unteren Reaktorteils (5) gegeben, so dass es den Mantel des Reaktors mit einer Temperatur nahe der Schmelzetemperatur im Auslauf des Schmelzekühlers verlässt. Über eine Pumpe (8) und einen Luftkühler (9) wird es noch weiter abgekühlt wieder in den Schmelzekühler (4) geleitet.

In Tabelle 1 sind erfindungsgemäße Temperaturbereiche im Reaktionsablauf einer PA6-Produktionsanlage mit Prepolymerkühlung angegeben, wobei sich die Stromnummern auf Fig. 1 beziehen.

**Tabelle 1**

| **Stromnummer** | **Temperatur** |
|---|---|
| A | 240...270 °C, bevorzugt 250...265°C |
| B | 245...275 °C, bevorzugt 255...270°C |
| C | 220...255 °C, bevorzugt 230...240°C |
| D | 220...255 °C, bevorzugt 230...240°C |
| E | 240...275 °C, bevorzugt 253...268°C |
| F | 218...253 °C, bevorzugt 228...238°C |
| G | 243...273 °C, bevorzugt 253...268°C |
| J | 222...257 °C, bevorzugt 232...242°C |
| K | 222...257 °C, bevorzugt 232...242°C |

Im Folgenden werden bevorzugte Verfahrensparameter für verschiedene Verfahrensweisen des erfindungsgemäßen Verfahrens angegeben:
1. Polymerisation ohne Prepolymerkühlung, unstabilisiert:

| | | | |
|---|---|---|---|
| Prepolymerisationsreaktor: | T_{Kopf} = 250 °C | T_{Boden} = 265 °C | p = 3 bar |
| VK-Rohr: | T_{Kopf} = 275 °C | T_{Boden} = 245 °C | p = 0,6 bar |
| **→** µᵣₑₗ = 3,31 | | | |

2. Polymerisation mit Prepolymerkühlung, unstabilisiert:

| | | | |
|---|---|---|---|
| Prepolymerisationsreaktor: | T_{Kopf} = 250 °C | T_{Boden} = 230 °C | p = 2,5 bar |
| VK-Rohr: | T_{Kopf} = 275 °C | T_{Boden} = 245 °C | p = 0,6 bar |
| **→** µᵣₑₗ = 3,71 | | | |

3. Polymerisation ohne Prepolymerkühlung, mit Stabilisator (0,05 % C₂H₄O₂):

| | | | |
|---|---|---|---|
| Prepolymerisationsreaktor: | T_{Kopf} = 250 °C | T_{Boden} = 265 °C | p = 3 bar |
| VK-Rohr: | T_{Kopf} = 275 °C | T_{Boden} = 245 °C | p = 0,6 bar |
| **→** µᵣₑₗ = 3,05 | | | |

4. Polymerisation mit Prepolymerkühlung, mit Stabilisator (0,1 % C₂H₄O₂):

| | | | |
|---|---|---|---|
| Prepolymerisationsreaktor: | T_{Kopf} = 250 °C | T_{Boden} = 230 °C | p = 2,5 bar |
| VK-Rohr: | T_{Kopf} = 275 °C | T_{Boden} = 245 °C | p = 0,6 bar |
| **→** µᵣₑₗ = 3,35 | | | |

5. Polymerisation ohne Prepolymerkühlung, mit Stabilisator (0,10 % C₂H₄O₂):

| | | | |
|---|---|---|---|
| Prepolymerisationsreaktor: | T_{Kopf} = 250 °C | T_{Boden} = 265 °C | p = 3 bar |
| VK-Rohr: | T_{Kopf} = 275 °C | T_{Boden} = 245 °C | p = 0,6 bar |
| **→** µᵣₑₗ = 2,83 | | | |

6. Polymerisation mit Prepolymerkühlung, mit Stabilisator (0,10 % C₂H₄O₂):

| | | | |
|---|---|---|---|
| Prepolymerisationsreaktor: | T_{Kopf} = 250 °C | T_{Boden} = 230 °C | p = 2,5 bar |
| VK-Rohr: | T_{Kopf} = 275 °C | T_{Boden} = 245 °C | p = 0,6 bar |
| **→** µᵣₑₗ = 3,06 | | | |

## Patentansprüche

1. Produktionsanlage für die Polymerisation von Polyamiden, insbesondere Polyamid 6 (PA 6), sowie Copolymeren hiervon enthaltend einen Reaktor für die Prepolymerisation (11) mit
- einem Einlaufbereich (1) für die Zugabe der Edukte,
- einem Heizaggregat (2),
- einem ersten Strömungsrohrteil (3), der eine separate Wandbeheizung aufweist,
- einem zweiten Strömungsrohrteil (5), der eine separate Wandbeheizung aufweist sowie
- einer Auslassleitung (7) für das Prepolymer,
wobei der Reaktor zwischen dem ersten Strömungsrohrteil (3) und dem zweiten Strömungsrohrteil (5) ein Kühlaggregat (4) aufweist und das Kühlaggregat (4) und die separaten Wandbeheizungen über einen einzigen Wärmeträgerkreislauf thermisch gekoppelt sind;
sowie einen sich anschließenden Reaktor mit einem vertikalen Kondensationsrohr (VK-Reaktor) (10).

2. Reaktor nach einem der vorhergehenden Ansprüche,
**dadurch gekennzeichnet, dass** das Heizaggregat ein statisches Heizaggregat, insbesondere ein Rohrbündel, ein innenbeheizter Überströmkörper, ein Plattenwärmetauscher oder eine Heizschlange, oder ein dynamisches Heizaggregat, insbesondere ein Roberts-Verdampfer oder ein Umlauferhitzer, ist.

3. Reaktor nach einem der vorhergehenden Ansprüche,
**dadurch gekennzeichnet, dass** die separaten Wandbeheizungen unabhängig voneinander Doppelmäntel und/oder Halbrohrheizschlangen sind.

4. Reaktor nach einem der vorhergehenden Ansprüche,
**dadurch gekennzeichnet, dass** die Strömungsrohrteile (3, 5) Strömungsgleichrichter aufweisen.

5. Reaktor nach einem der vorhergehenden Ansprüche,
**dadurch gekennzeichnet, dass** in der Auslassleitung (7) eine Austragspumpe (6) zum Transport des Prepolymers integriert ist und/oder eine Wandbeheizung, insbesondere einen Heizmantel, aufweist.

6. Verfahren zur Polymerisation von Polyamiden, insbesondere Polyamid 6 (PA 6), sowie Copolymeren hiervon, bei dem
a) in einen Einlaufbereich (1) eines Prepolymerisationsreaktors (11) die Edukte dosiert werden,
b) mittels eines Heizaggregats (2) die Temperatur der Polymerschmelze auf 240 bis 270°C, insbesondere 250 bis 265 °C eingestellt wird,
c) die Polymerschmelze über einen ersten Strömungsrohrteil (3), der mit einer separaten Wandbeheizung zur Vermeidung eines Wärmeverlusts gekoppelt ist, zu einem Kühlaggregat (4) geleitet wird, mit dem die Temperatur der Polymerschmelze auf 220 bis 240 °C eingestellt wird und
d) die Polymerschmelze über einen zweiten Strömungsrohrteil (5), der mit einer separaten Wandbeheizung zur Vermeidung eines Wärmeverlusts gekoppelt ist, zu einer Auslassleitung (7) transportiert wird und
e) das Prepolymer über die Auslassleitung einem Reaktor mit einem vertikalen Kondensationsrohr (VK-Reaktor) (10) zugeführt wird,
wobei das Kühlaggregat (4) und die separaten Wandbeheizungen über einen einzigen Wärmeträgerkreislauf thermisch gekoppelt werden.

7. Verfahren nach Anspruch 6,
**dadurch gekennzeichnet, dass** in einem dem Einlaufbereich (1) vorgeschalteten Mischbehälter, die Edukte, insbesondere Monomere, Wasser und Additive, vorgemischt werden.

8. Verfahren nach einem der Ansprüche 6 bis 7,
**dadurch gekennzeichnet, dass** als separate Wandbeheizungen unabhängig voneinander Doppelmäntel und/oder Halbrohrheizschlangen verwendet werden.

9. Verfahren nach einem der Ansprüche 6 bis 8,
**dadurch gekennzeichnet, dass** in den Strömungsrohrteilen (3, 5) mittels Strömungsgleichrichter eine Kolbenströmung der Polymerschmelze ermöglicht wird.

10. Verfahren nach einem der Ansprüche 6 bis 9,
**dadurch gekennzeichnet, dass** die Polymerschmelze durch die Auslassleitung (7) mittels einer Austragspumpe (6) oder mittels Druck im Reaktor transportiert wird.

11. Verfahren nach einem der Ansprüche 6 bis 10,
**dadurch gekennzeichnet, dass** die Auslassleitung (7) eine Beheizung, insbesondere einen Heizmantel, zur Wärmeeinleitung in die Polymerschmelze aufweist, wobei die Beheizung vorzugsweise ebenfalls über den Wärmeträgerkreislauf thermisch gekoppelt ist.

12. Verfahren nach einem der Ansprüche 6 bis 11,
**dadurch gekennzeichnet, dass** die Temperatur der Polymerschmelze am Übergang der Auslassleitung zum Kondensationsreaktor bevorzugt 240 bis 275 °C, besonders bevorzugt 253 bis 268 °C beträgt.

13. Verfahren nach einem der Ansprüche 6 bis 12,
**dadurch gekennzeichnet, dass** das Polyamid eine relative Viskosität von 2,4 bis 4,5, insbesondere von 3,0 bis 3,6, gemessen in einer Lösung von 1 g Polyamid in 96%iger Schwefelsäure bei 25 °C aufweist.

## Claims

1. A production plant for the polymerisation of polyamides, in particular polyamide 6 (PA 6), and also copolymers thereof, containing a reactor for the prepolymerisation (11) having
- an inlet region (1) for adding the educts,
- a heating unit (2),
- a first tubular-flow reactor portion (3) which has a separate wall heating means,
- a second tubular-flow reactor portion (5) which has a separate wall heating means, and also
- an outlet line (7) for the prepolymer,
wherein the reactor has a cooling unit (4) between the first tubular-flow reactor portion (3) and the second tubular-flow reactor portion (5), and the cooling unit (4) and the separate plural wall heating means are thermally coupled by means of a single heat transfer circuit;
and also a subsequent reactor with a vertical condensing tube (VC reactor) (10).

2. A reactor according to one of the preceding claims,
**characterised in that** the heating unit is a static heating unit, in particular a tube bundle, an internally heated overflow body, a plate-type heat exchanger or a heating coil, or a dynamic heating unit, in particular a Roberts evaporator or a circulation heater.

3. A reactor according to one of the preceding claims,
**characterised in that** the separate plural wall heating means, independently of each other, are double jackets and/or half-tube heating coils.

4. A reactor according to one of the preceding claims,
**characterised in that** the tubular-flow reactor portions (3, 5) have flow rectifiers.

5. A reactor according to one of the preceding claims, **characterised in that** in the outlet line (7) there is integrated a discharge pump (6) for transporting the prepolymer, and/or has a wall heating means, in particular a heating jacket.

6. A method for the polymerisation of polyamides, in particular polyamide 6 (PA 6), and copolymers thereof, in which
a) the educts are metered into an inlet region (1) of a prepolymerisation reactor (11),
b) the temperature of the polymer melt is set to 240 to 270°C, in particular 250 to 265°C, by means of a heating unit (2),
c) the polymer melt is guided via a first tubular-flow reactor portion (3), which is coupled with a separate wall heating means in order to avoid any heat loss, to a cooling unit (4) with which the temperature of the polymer melt is set to 220 to 240°C, and
d) the polymer melt is transported via a second tubular-flow reactor portion (5), which is coupled with a separate wall heating means in order to avoid any heat loss, to an outlet line (7), and
e) the prepolymer is supplied via the outlet line to a reactor with a vertical condensing tube (VC reactor) (10),
wherein the cooling unit (4) and the separate plural wall heating means are thermally coupled by means of a single heat transfer circuit.

7. A method according to Claim 6,
**characterised in that** the educts, in particular monomers, water and additives, are premixed in a mixing vessel which precedes the inlet region (1).

8. A method according to one of Claims 6 to 7,
**characterised in that** double jackets and/or half-tube heating coils are used as separate plural wall heating means independently of each other.

9. A method according to one of Claims 6 to 8,
**characterised in that** a plug flow of the polymer melt is made possible in the tubular-flow reactor portions (3, 5) by means of flow rectifiers.

10. A method according to one of Claims 6 to 9,
**characterised in that** the polymer melt is transported through the outlet line (7) by means of a discharge pump (6) or by means of pressure in the reactor.

11. A method according to one of Claims 6 to 10,
**characterised in that** the outlet line (7) has a heating means, in particular a heating jacket, for introducing heat into the polymer melt, the heating means preferably likewise being thermally coupled by means of the heat transfer circuit.

12. A method according to one of Claims 6 to 11,
**characterised in that** the temperature of the polymer melt at the transition from the outlet line to the condensation reactor is preferably 240 to 275°C, particularly preferably 253 to 268°C.

13. A method according to one of Claims 6 to 12,
**characterised in that** the polyamide has a relative viscosity of 2.4 to 4.5, in particular of 3.0 to 3.6, measured in a solution of 1 g polyamide in 96%-strength sulphuric acid at 25°C.

## Revendications

1. Installation de production pour la polymérisation de polyamides, en particulier du polyamide 6 (PA 6), ainsi que de copolymères de ces derniers, contenant un réacteur pour la prépolymérisation (11), comportant :
- une zone d'entrée (1) destinée à l'introduction des matières de charge,
- un groupe de chauffage (2),
- une première partie tubes d'écoulement (3), qui présente un chauffage de paroi distinct,
- une deuxième partie tubes d'écoulement (5), qui présente un chauffage de paroi distinct, ainsi que
- une conduite de sortie (7) pour le prépolymère,
dans laquelle le réacteur présente, entre la première partie tubes d'écoulement (3) et la deuxième partie tubes d'écoulement (5), un groupe frigorifique (4), et le groupe frigorifique (4) et les chauffages de paroi distincts étant thermiquement couplés par l'intermédiaire d'un circuit unique de caloporteur ;
ainsi qu'un réacteur disposé en aval, comportant un tube de condensation vertical (réacteur VK) (10).

2. Réacteur selon l'une des revendications précédentes, **caractérisé en ce que** le groupe de chauffage est un groupe de chauffage statique, en particulier un faisceau tubulaire, un élément à débordement à chauffage intérieur, un échangeur de chaleur à plaques ou un serpentin réchauffeur, ou un groupe de chauffage dynamique, en particulier un évaporateur Roberts ou un réchauffeur à recirculation.

3. Réacteur selon l'une des revendications précédentes, **caractérisé en ce que** les chauffages de paroi distincts sont, indépendamment les uns des autres, des doubles enveloppes et/ou des serpentins réchauffeurs en demi-tubes.

4. Réacteur selon l'une des revendications précédentes, **caractérisé en ce que** les deux parties tubes d'écoulement (3, 5) comprennent des redresseurs d'écoulement.

5. Réacteur selon l'une des revendications précédentes, **caractérisé en ce que** dans la conduite de sortie (7) est intégrée une pompe de décharge (6) destinée au transport du prépolymère, et/ou cette pompe comprend un chauffage de paroi, en particulier une chemise chauffante.

6. Procédé pour la polymérisation de polyamides, en particulier du polyamide 6 (PA 6), ainsi que de copolymères de ce dernier, dans lequel :
a) dans une zone d'entrée (1) d'un réacteur de prépolymérisation (11), on dose les matières de charge,
b) à l'aide d'un groupe de chauffage (2), on ajuste la température de la masse fondue de polymère à 240 à 270 °C, en particulier à 250 à 265 °C,
c) par l'intermédiaire d'une première partie tubes d'écoulement (3), qui est couplée à un chauffage de paroi distinct dans le but d'éviter une perte de chaleur, on envoie la masse fondue de polymère à un groupe frigorifique (4), à l'aide duquel la température de la masse fondue de polymère est ajustée à 220 à 240 °C, et
d) par l'intermédiaire d'une deuxième partie tubes d'écoulement (5), qui est couplée à un chauffage de paroi distinct dans le but d'empêcher une perte de chaleur, on transporte la masse fondue de polymère jusqu'à une conduite de sortie (7), et
e) on envoie le prépolymère, par la conduite de sortie, à un réacteur comportant un tube de condensation vertical (réacteur VK) (10),
dans lequel le groupe frigorifique (4) et les chauffages de paroi distincts sont thermiquement couplés par l'intermédiaire d'un circuit unique de caloporteur.

7. Procédé selon la revendication 6, **caractérisé en ce que**, dans un récipient mélangeur monté en amont de la zone d'entrée (1), on prémélange les matières de charge, en particulier les monomères, l'eau et les additifs.

8. Procédé selon l'une des revendications 6 à 7, **caractérisé en ce qu'**on utilise en tant que chauffages de paroi distincts, indépendamment les uns des autres, des doubles enveloppes et/ou des serpentins à demi-tubes.

9. Procédé selon l'une des revendications 6 à 8, **caractérisé en ce que**, dans les parties tubes d'écoulement (3, 5), et à l'aide de redresseurs d'écoulement, il est possible de réaliser un écoulement piston de la masse fondue de polymère.

10. Procédé selon l'une quelconque des revendications 6 à 9, **caractérisé en ce que** la masse fondue de polymère est, par la conduite de sortie (7) et à l'aide d'une pompe de décharge (6) ou sous pression, transportée dans le réacteur.

11. Procédé selon l'une des revendications 6 à 10, **caractérisé en ce que** la conduite de sortie (7) présente un chauffage, en particulier une enveloppe chauffante, pour amener de la chaleur dans la masse fondue de polymère, le chauffage étant de préférence lui aussi thermiquement couplé par l'intermédiaire du circuit de caloporteur.

12. Procédé selon l'une des revendications 6 à 11, **caractérisé en ce que** la température de la masse fondue de polymère au niveau de la transition entre la conduite de sortie et le réacteur de condensation est de préférence de 240 à 275 °C, d'une manière particulièrement préférée de 253 à 268 °C.

13. Procédé selon l'une des revendications 6 à 12, **caractérisé en ce que** le polyamide présente une viscosité relative de 2,4 à 4,5, en particulier de 3,0 à 3,6, mesurée à 25 °C dans une solution de 1 g de polyamide dans de l'acide sulfurique à 96 %.
